# EUROPÄISCHE PATENTSCHRIFT

(11) **EP 3 472 564 B1**
(45) Veröffentlichungstag und Bekanntmachung des Hinweises auf die Patenterteilung: **29.09.2021**
(21) Anmeldenummer: 17732831.7
(22) Anmeldetag: 14.06.2017
(51) Int. Cl.: G01D 5/14

(54) **SENSORANORDNUNG ZUR WINKELERFASSUNG UND SCHALTGETRIEBE**
SENSOR ARRANGEMENT FOR ANGLE DETECTION AND MANUAL TRANSMISSION
SYSTÈME DE DÉTECTION SERVANT À LA DÉTECTION D'ANGLE ET BOÎTE DE VITESSES

(30) Priorität: 17.06.2016 DE 102016111097
(43) Veröffentlichungstag der Anmeldung: 24.04.2019
(73) Patentinhaber: KNORR-BREMSE Systeme für Nutzfahrzeuge GmbH, 80809 München (DE)
(72) Erfinder: HUBER, Christian, 80937 München (DE); SCHUDY, Jürgen, 85256 Vierkirchen (DE)
(86) Internationale Anmeldenummer: PCT/EP2017/064470
(87) Internationale Veröffentlichungsnummer: WO 2017/216198

(56) Entgegenhaltungen:
- EP-A2- 1 381 148
- EP-A2- 1 381 148
- DE-A1- 10 106 056
- DE-A1- 10 106 056
- DE-A1- 19 828 513
- DE-A1- 19 828 513
- DE-A1-102010 042 023
- DE-A1-102010 042 023
- DE-A1-102010 042 023
- DE-A1-102010 062 776
- DE-A1-102010 062 776
- DE-A1-102014 004 452
- DE-A1-102014 004 452
- DE-T2- 60 202 500
- DE-T2- 60 202 500
- DE-T5-112011 104 425
- DE-T5-112011 104 425
- US-A1- 2014 222 364
- US-A1- 2014 222 364

## Beschreibung

Die vorliegende Erfindung bezieht sich auf eine Sensoranordnung zur Winkelerfassung, auf ein Schaltgetriebe und insbesondere auf eine Sensoranordnung zur Sensierung einer Kippgabel für ein Schaltgetriebe, insbesondere eines Nutzfahrzeuges.

Nutzfahrzeugbau (z.B. für Nutzfahrzeuge im Nah- und Fernverkehr, Verteilerverkehr, sowie für Überland- und Reisebusverkehr) besitzen häufig Schaltgetriebe mit einer Vielzahl von Gangstufen, die in Gruppenbauweise hergestellt werden. Dieser Aufbau wird bei Nutzfahrzeugen zunehmend für automatisierte Schaltgetriebe verwendet, wobei prinzipiell unterschiedliche Automatisierungsgrade vorkommen können. Je nach Ausführung kann dabei der Anfahrvorgang, die Betätigung der Schaltkupplung sowie die Gangwahl automatisch erfolgen. Bei Handschaltgetrieben ist keiner dieser Vorgänge automatisiert, bei teilautomatisierten Schaltgetrieben ist zumindest einer dieser Vorgänge automatisiert und bei vollautomatischen Schaltbetrieben erfolgen alle Vorgänge automatisiert.

Daher bedarf es angepasster Betätigungseinrichtungen für eine automatisierte Anfahrkupplung, ein automatisiertes Kuppeln beim Schalten sowie eine automatisierte Gangwahl bei einem Motormanagement. Von zentraler Bedeutung für die Schaltautomatisierung ist die möglichst genaue Erfassung von Positionen von Schaltelementen, um dadurch automatisierte Schaltabläufe weiter zu optimieren und die Effizienz zu steigern.

Bei bekannten konventionellen Systemen erfolgt die Positionsbestimmung von Schaltelementen in Schaltgetrieben über eine Erfassung von linearen Verschiebungen. Solche Verschiebungen stellen beispielsweise einen gewünschten Aktuatorweg (beispielsweise für eine Schaltgabel) dar und sind beispielsweise durch eine Kolbenposition innerhalb eines Zylinders erfassbar.

Konventionelle Systeme sind in den folgenden Dokumenten offenbart: DE 10 2010 042 023 A1 offenbart ein Stellglied zur Auswahl mindestens eines ausführbaren Schaltzustandes, EP 1 381 148 A3 offenbart eine auflösende Drehwinkelsensorik für Gleichstrommotoren und DE 101 06 056 A1 offenbart eine Einrichtung zur Erzeugung von elektrischen Signalen in Abhängigkeit einer Drehstellung einer Welle. DE 198 28 513 A1 offenbart eine elektrisch unterstützte Hilfskraftlenkung für Kraftfahrzeuge, DE 10 2010 062 776 A1 offenbart eine Vorrichtung und Verfahren zur Messung eines Torsionswinkels und US 2014/0222364 A1 offenbart einen magnetischen Sensor und ein entsprechendes Verfahren zur Messung eines Schwellenwertes. DE 11 2011 104 425 T5 offenbart ein System und Verfahren zum Synchronisieren von Sensordaten, DE 10 2014 004 452 A1 offenbart ein System zum Detektieren einer Winkelposition eines Schaftes von einem Eingabegerät und DE 602 02 500 offenbart eine Schalteinrichtung mit einem Hall-Sensor.

In einem automatisierten Schaltgetriebe werden Winkelstellungen von einer oder mehreren Kippgabeln erfasst und an ein Getriebesteuergerät (TCU = Transmission Control Unit) weitergegeben. Hierbei ist es wichtig, die Position der Kippgabel(n) möglichst genau zu bestimmen und Ungenauigkeiten in der Messkette zu reduzieren. Solche Ungenauigkeiten treten beispielsweise durch einen Verschleiß, durch ein Spiel, Elastizitäten infolge von Steifigkeiten und thermischen Ausdehnungen auf.

Daher besteht ein Bedarf nach einer Sensoranordnung, die die obengenannten Nachteile oder Einschränkungen nicht aufweist.

Diese technische Aufgabe wird durch eine Sensoranordnung nach Anspruch 1 und einem Schaltgetriebe nach Anspruch 10 gelöst. Die abhängigen Ansprüche beziehen sich auf vorteilhafte Weiterbildungen der Gegenstände der unabhängigen Ansprüche.

Die vorliegende Erfindung bezieht sich auf eine Sensoranordnung, die geeignet ist, um Winkel eines drehbaren Stellmittels relativ zu einer Halterung zu erfassen, wobei das Stellmittel drehbar an der Halterung angeordnet ist. Die Sensoranordnung umfasst (zumindest) ein erstes Sensorelement und (zumindest) ein zweites Sensorelement. Das erste Sensorelement ist mit dem Stellmittel gekoppelt, um ansprechend auf eine Drehung des Stellmittels relativ zu der Halterung eine Bewegung (z.B. eine Drehung) auszuführen. Das zweite Sensorelement ist drehfest an der Halterung fixiert und ist mit dem ersten Sensorelement gekoppelt, um bei einer Drehung des Stellmittels und einer daraus resultierenden relativen Bewegung (z.B. Drehung) zwischen dem ersten Sensorelement und dem zweiten Sensorelement ein Sensorsignal zu erzeugen, welches von der ausgeführten Drehung des Stellmittels abhängt.

Das Stellmittel und die Halterung brauchen nicht Teil der Sensoranordnung zu sein. Das Stellmittel ist eine Schaltgabel eines Schaltgetriebes, an welchem die Sensoranordnung befestigt wird.

Das Sensorsignal soll im Rahmen der vorliegenden Erfindung möglichst breit ausgelegt werden und kann eine beliebige Änderung des elektrischen Stroms/ bzw. der Spannung umfassen, die sich auf Grund der Bewegung ändert. Diese Änderung kann durch eine Widerstandsänderung entlang eines Strompfades oder eine induktive Änderung oder eine Änderung, die durch die Lorentzkraft verursacht wird, verursacht werden. Es kann aber auch ein optisches Signal sein, das sich bewegungsbedingt ändert.

Ausführungsbeispiele der vorliegenden Erfindung lösen die obengenannte technische Aufgabe durch eine Sensoranordnung zur direkten Erfassung einer Drehung von mindestens einem Stellmittel einer Getriebeschaltung.

Insbesondere kann ein magnetisches Messprinzip genutzt werden. Beispielsweise umfasst das erste Sensorelement einen Permanentmagneten, der mit einer Drehung des Stellmittels ein veränderliches Magnetfeld erzeugt, und das zweite Sensorelement ist ausgebildet, um ansprechend auf eine Änderung des Magnetfeldes das Sensorsignal zu erzeugen.

In der vorliegenden Erfindung umfasst die Sensoranordnung eine Auswerteschaltung und ein Gehäuse. Das zweite Sensorelement und die Auswerteschaltung sind dabei in dem Gehäuse angeordnet und zusammen mit dem Gehäuse an der Halterung als eine abgeschlossene, gekapselte Einheit fixiert.

Bei weiteren Ausführungsbeispielen sind das erste Sensorelement und das zweite Sensorelement Teil eines induktiven oder magnetischen Sensors, der beispielsweise einen (2- oder 3-dimensionalen) Hall-Sensor oder einen magnetoresistiven Sensor aufweisen kann. Der magnetoresistive Sensor kann beispielsweise ein GMR-Sensor (engl., giant magnetoresistance, GMR), ein AMR-Sensor (engl., anisotropic magnetoresistance, AMR), ein TMR-Sensor (engl., tunnel magnetoresistance, TMR)

Die vorliegende Erfindung ist aber nicht auf ein magnetisches Messprinzip eingeschränkt. So sind bei weiteren Ausführungsbeispielen das erste Sensorelement und das zweite Sensorelement optisch miteinander gekoppelt, wobei die Sensorelemente eine Lichtquelle (z.B. einen Laser), einen Lichtsensor und geometrische Strukturen (z.B. Schlitze) umfassen, die in Abhängigkeit von der relativen Drehung das Lichtsignal unterbrechen.

Bei weiteren Ausführungsbeispielen umfasst die Sensoranordnung optional ein Getriebe, das das erste Sensorelement mit dem Stellmittel koppelt. Damit wird es möglich einen Drehwinkelbereich des Stellmittels auf einen größeren Winkelbereich des ersten Sensorelementes zu übersetzen, um so eine größere Winkelauflösung zu ermöglichen.

Bei weiteren Ausführungsbeispielen ist das erste Sensorelement ohne ein Koppelelement, wie beispielsweise ein Getriebe, direkt drehfest an dem Stellmittel fixiert.

Bei weiteren Ausführungsbeispielen umfasst Sensoranordnung außerdem einen Temperatursensor zur Erfassung einer Temperatur, um eine Korrektur basierend auf der erfassten Temperatur durchzuführen. Der Temperatursensor kann als separates Bauteil ausgebildet sein oder auch in einem Chip integriert sein. Die Erfassung der Temperatur ist beispielsweise wichtig, um einen Schaltvorgang in einem Getriebe optimal auszuführen. Abgesehen von temperaturbedingten Ausdehnungen ist auch die Konsistenz eines Getriebeöls abhängig von der Temperatur. Die Getriebesteuerung kann diese Daten berücksichtigen und kann einen erfassten Drehwinkel in Abhängigkeit von der Temperatur unterschiedlich bewerten.

Die vorliegende Erfindung bezieht sich auch auf Sensorsystem, das mit einem Steuergerät koppelbar ist. Das Sensorsystem umfasst (zumindest) eine erste Sensoranordnung und (zumindest) eine zweite Sensoranordnung, wie sie zuvor definiert wurden. Außerdem umfasst das Sensorsystem ein Bussystem, das ausgebildet ist, um Daten zwischen der ersten/zweiten Sensoranordnung und dem Steuergerät zu übertragen. Hierfür kann beispielsweise eine universelle Schnittstelle genutzt werden, die für eine Vielzahl von Sensoren zum Einsatz kommen kann. Damit können Ausführungsbeispiele an verschiedene Schaltkonzepte angepasst werden.

Die vorliegende Erfindung bezieht sich auch auf ein Schaltgetriebe mit einer Sensoranordnung oder einem Sensorsystem, wie sie zuvor definiert wurden, und einem Steuergerät. Das Stellmittel kann optional eine Schaltgabel sein und das Steuergerät kann ausgebildet sein, um ein Schalten des Schaltgetriebes zu steuern und Sensorsignale der Sensoranordnung auszuwerten. Das Steuergerät kann insbesondere einen Schaltzustand des Schaltgetriebes anzeigen.

Bei weiteren Ausführungsbeispielen umfasst das Schaltgetriebe einen weiteren Sensor, der ausgebildet ist, um eine Bewegung der Schaltgabel festzustellen, so dass der weitere Sensor und die Sensoranordnung redundant sind, um sicherheitsrelevanten Anforderungen zu genügen.

Bei weiteren Ausführungsbeispielen umfasst das Schaltgetriebe ein Steuergerät, das ausgebildet ist, um das erfasste rotatorische Sensorsignal (das einen Drehwinkel anzeigt) in eine Wegstrecke oder eine lineare Bewegung umzurechnen und so die Position einer Schaltgabel im Getriebe festzustellen. Die Umrechnung kann durch eine entsprechende Kalibrierung definiert werden, bei der ein erfasster Drehwinkel einem linearen Versatz, der den Schaltvorgang letztlich bewirkt, zugeordnet wird. Diese Zuordnung kann sich beispielsweise durch Verschleiß mit der Zeit ändern. Dies kann durch einen Software basierten Lernvorgang kompensiert werden. Außerdem kann diese Zuordnung auch von der Temperatur abhängen (z.B. wegen thermischer Ausdehnungen), so dass optional die erfasste Temperatur hierfür berücksichtigt werden kann. Somit können unterschiedliche Schaltkonzepte leicht umgesetzt werden.

Die vorliegende Erfindung bezieht sich ebenfalls auf eine Steuereinrichtung für ein Schaltgetriebe eines Nutzfahrzeuges, wobei die Steuereinrichtung die Sensoranordnung umfassen kann oder zumindest Sensorsignale von der Sensoranordnung empfangen kann, um das Schaltgetriebe basierend auf den erfassten Sensorsignalen zu steuern und Aktuatoren entsprechend zu betätigen.

Die Ausführungsbeispiele der vorliegenden Erfindung werden besser verstanden mit der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
Fig. 1 zeigt eine Sensoranordnung gemäß einem Ausführungsbeispiel der vorliegenden Erfindung, wobei die Schaltgabel und das Gehäuse nicht gezeigt sind.
Fig. 2 zeigt eine Sensierung einer Kippgabel gemäß der vorliegenden Erfindung.

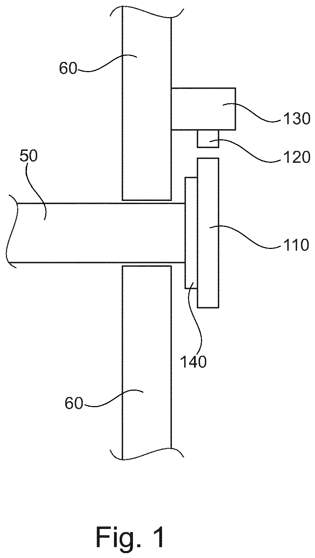

**Fig. 1** zeigt eine Sensoranordnung nach einem Ausführungsbeispiel der vorliegenden Erfindung. Die Sensoranordnung ist geeignet zur Winkelerfassung eines Stellmittels 50, welches drehbar in einer Halterung 60 angeordnet ist. Die Fig. 1 zeigt lediglich einen Teil des Stellmittels 50, welches beispielsweise eine Drehachse einer Schaltgabel sein kann.

Die Sensoranordnung umfasst ein erstes Sensorelement 110 und ein zweites Sensorelement 120, wobei das erste Sensorelement 110 bevorzugt spielfrei an das Stellmittel 50 koppelt, so dass bei einer Drehung des Stellmittels 50 ebenfalls das erste Sensorelement 110 eine Bewegung (relativ zur Halterung 60) ausführt. Das zweite Sensorelement 120 ist beispielsweise an der Halterung 60 befestigt. Eine Drehung des Stellmittel 50 relativ zu der Halterung 60 führt somit zu einer relativen Bewegung zwischen dem ersten Sensorelement 110 und dem zweiten Sensorelement 120.

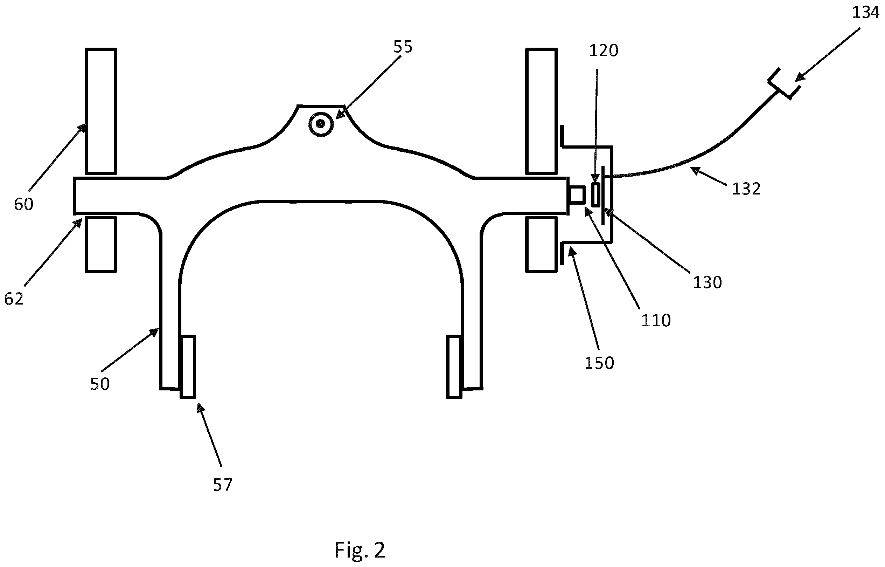

Das erste Sensorelement 110 kann beispielsweise fest an dem Stellmittel 50 befestigt sein. Optional kann zwischen dem ersten Sensorelement 110 und dem Stellmittel 50 aber auf ein Koppelelement 140 (z.B. ein Getriebe) ausgebildet sein, so dass ein Drehwinkel des Stellmittels 50 durch das Getriebe 140 vergrößert wird und sich das erste Sensorelement 110 dadurch mit einer größeren Winkelgeschwindigkeit dreht als des Stellmittel 50 (eine dafür eventuell erforderliche Abstützung an der Halterung 60 ist in der Fig. 2 nicht gezeigt). Somit kann die Messgenauigkeit erhöht werden.

Optional kann eine größere Winkelmessgenauigkeit bereits dadurch erreicht werden, dass die radiale Ausdehnung des ersten Sensorelementes 110 vergrößert wird (in dem es z.B. eine vergrößerte Scheibe ist, wie es in der Fig. 1 gezeigt ist). Dadurch wird zwar nicht die Winkelauslenkung vergrößert, aber die radialen Endpunkte des ersten Sensorelements 110 legen einen größeren Weg bei einer Drehung zurück und diese größere Wegstrecke ist wiederum leichter detektierbar.

Das erste Sensorelement 110 kann beispielsweise ein Magnet sein und das zweite Sensorelement 120 kann beispielsweise das durch das erste Sensorelement 110 erzeugte magnetische Feld erfassen. Beispielsweise kann das erste Sensorelement 110 ein Magnetfeld erzeugen, dessen Feldlinien nicht um die Drehachse des Stellmittels 50 rotationssymmetrisch sind (ansonsten wäre die Drehung kaum feststellbar). Eine Drehung des Stellmittels 50 bewirkt somit eine Änderung des Magnetfeldes, die beispielsweise induktiv oder als Lorentzkraft oder magnetoresistiv durch das zweite Sensorelement 120 erfassbar ist. Dementsprechend kann das zweite Sensorelement 120 beispielsweise eine Spule, einen Hall-Sensor oder einen magnetoresistiven Sensor (z.B. GMR-Sensor, AMR-Sensor, TMR-Sensor, etc.) aufweisen.

Die Sensoranordnung kann ferner eine Auswerteeinheit 130 aufweisen, auf der das zweite Sensorelement 120 befestigt sein kann. Die Auswerteeinheit 130 erzeugt basierend auf der von dem zweiten Sensorelement erfassten Änderung des Magnetfeldes ein Sensorsignal, welches den Winkel des Stellelements 50 anzeigt.

**Fig. 2** zeigt eine Sensierung einer Kippgabel gemäß weiterer Ausführungsbeispiele der vorliegenden Erfindung. In dem in der Fig. 2 gezeigten Ausführungsbeispiel ist das Stellmittel 50 beispielhaft eine Schaltgabel eines Schaltgetriebes, die als Kippgabel ausgeführt ist.

Die Schaltgabel 50 (Kippgabel) umfasst eine Drehlagerung 62, eine Kraftpunkt 55 und zwei Gabelenden, an denen jeweils ein Gleitstein 57 zur Umsetzung eines Schaltvorganges ausgebildet ist. Die Gleitsteine 57 greifen beispielsweise in eine Schaltmuffe ein (nicht gezeigt) und bewirken so eine Linearbewegung senkrecht zur Zeichenebene zum Schalten des Schaltgetriebes. Die Drehlagerung 62 definiert eine Drehachse, um die die Schaltgabel 50 drehbar durch die Halterung 60 gehalten wird. Der Kraftpunkt 55 dient als Punkt, auf welchem eine Kraft einwirken kann, um die beispielhafte Schaltgabel 50 zu drehen.

Bei dem in der Fig. 2 gezeigten Ausführungsbeispiel umfasst die Sensoranordnung ein Gehäuse 150, in welchem das zweite Sensorelement 120 und die Auswerteschaltung 130 untergebracht sind und zusammen an der Halterung 60 befestigt sind. Beispielsweise kann das zweite Sensorelement 120 direkt an der Auswerteschaltung 130 (z.B. eine Leiterplatte) oder auch direkt an dem Gehäuse 150 befestigt sein. Dies ist jedoch nicht zwingend so. Die Auswerteschaltung 130 ist beispielsweise über eine Steuerleitung 132 und einen optionalen Stecker 134 mit einem Steuergerät (nicht gezeigt in der Fig. 2) koppelbar. Sensordaten von dem zweiten Sensorelement 120 können optional ebenfalls über eine drahtlose Verbindung oder über eine Busleitung an das Steuergerät weitergeleitet werden.

Das erste Sensorelement 110 ist in diesem Ausführungsbeispiel direkt drehfest mit der Schaltgabel 50 verbunden, so dass Drehungen der Schaltgabel 50 (relativ zur Halterung 60) zu relativen Bewegungen zwischen dem ersten Sensorelement 110 und dem zweiten Sensorelement 120 führen. Das erste (oder zweite) Sensorelement kann wiederum einen Magnet (Permanentmagnet oder Elektromagnet) umfassen, der derart angeordnet werden kann, dass Drehung der Schaltgabel 50 relativ zu der Halterung 60 zu einer Änderung des Magnetfeldes führen. Das andere Sensorelement kann als magnetischer Sensor wirken und die Änderung des Magnetfeldes erfassen und ein entsprechendes Sensorsignal erzeugen.

Für diese magnetische Erfassung kann das zweite Sensorelement 120 beispielsweise eine Spule oder ein anderes induktives Mittel aufweisen, welches sensitiv für eine Änderung des Magnetfeldes ist. Optional ist es ebenfalls möglich, dass das zweite Sensorelement 120 zusammen mit dem ersten Sensorelement 110 einen magnetoresistiven Sensor darstellt. Im Rahmen der vorliegenden Erfindung kann als magnetorisistiver Sensor jeder Sensor genommen werden, der eine Widerstandsänderung eines elektrischen Stromes als Folge einer Änderung des äußeren Magnetfeldes detektiert. Die Sensoranordnung kann aber die Drehung des Schaltgabel (Stellmittel) 50 auch basierend auf dem Hall-Effekt (2D oder 3D) feststellen. Die vorliegende Erfindung ist nicht auf spezifische magnetische Sensoren eingeschränkt. Bei weiteren Ausführungsbeispielen kann die Sensoranordnung einen optischen Sensor aufweisen, um die Drehung festzustellen. Beispielsweise kann das erste Sensorelement 110 eine Scheibe mit Schlitzen sein, die optisch erfasst werden können. Weiterhin sind auch induktive Messprinzipien einsetzbar.

Die Vorteile der Erfindung können wie folgt zusammengefasst werden:
Für die Umsetzung einer Getriebesteuerung ist es wichtig die Position der Schaltgabel möglichst genau zu erfassen. Je näher der Positionssensor bzw. ein Target (das erste Sensorelement) hierfür an der Schaltgabel befestigt werden kann, umso weniger wird das Messsignal durch andere Einflüsse wie beispielsweise Durchbiegungen,
Elastizitäten usw. der an der Übertragung der Kraft beteiligten Komponenten verfälscht. Ausführungsbeispiele führen hier zu einer deutlichen Verbesserung der Regelung, da beispielsweise die Drehung direkt erfassbar wird.

Außerdem können unter Nutzung der erfindungsgemäßen Sensoranordnung weitere Funktionen implementiert werden. Beispielsweise können Informationen über die Gabelpositionen über deren Lebenszeit ermittelt werden. Die Gleitsteine 57 weisen beispielsweise ein Bronzematerial auf, was sich sich mit der Zeit abnutzen kann. Diese Abnutzung kann sich in einer Änderung der Winkelposition (z.B. für eine Endposition eines Schaltvorganges) zeigen. Da jedoch für einen erfolgreichen Schaltvorgang eine ausreichende Linearbewegung der beispielhaften Schaltmuffe, in die die Gleitsteine 57 beispielsweise eingreifen, wichtig ist, kann diese Abnutzung durch die Getriebesteuereinheit (nicht gezeigt) berücksichtigt werden.

Bei einer Kippgabel wird die Schaltgabel um eine Achse orthogonal zu einer entsprechenden An-/Abtriebswellenachse geschwenkt. Mit einer genauen Erfassung der Drehposition der Kippgabel und einer entsprechenden Kalibrierung (Umrechnung in eine Linearbewegung, z.B. der Schaltmuffe) ist eine separate lineare Sensierung des Aktuatorweges nicht erforderlich. Der Schwenkwinkel der Kippgabel kann vielmehr direkt erfasst werden und unter Nutzung der Kalibrierung in die entsprechende Linearbewegung, die den Schaltvorgang ausführt, umgerechnet werden. Damit werden ein Großteil der anderenfalls vorhandenen spiel- und elastizitätsbedingten Ungenauigkeiten in der Messkette vermieden. Ausführungsbeispiele erreichen daher durch die direkte Drehwinkelerfassung eine deutlich präzisere Positionserfassung der Schaltgabel, was in einer insgesamt verbesserten Regelbarkeit der automatisierten Schaltung und damit zur Effizienzsteigerung des Antriebsstranges beiträgt.

Aspekte von Ausführungsbeispielen der vorliegenden Erfindung können auch wie folgt zusammengefasst werden:
Ausführungsbeispiele beziehen sich auf einen Positionssensor, insbesondere einen Winkelsensor, der an einer Lagerung einer Gabel (Stellmittel 50) angeflanscht ist. Als Target oder als Element, dessen Drehung erfasst werden soll, kann beispielsweise ein Permanentmagnet genommen werden, der mit der Welle der Gabel drehfest verbunden ist. Der Positionssensor ist eine abgeschlossene, gekapselte Einheit. Als Sensorprinzip können beispielsweise folgende Wirkprinzipien genutzt werden: magnetisch (Hall, 3D-Hall, GMR, AMR), induktiv (z.B. PLCD; permanent magnetic linear contactless displacement, engl.), optisch (inkremental).

Optional ist es ebenfalls möglich ein Getriebe zu verwenden, um den Winkelbereich der Gabel auf einen größeren Winkelbereich für das Target zu übersetzen. Damit kann das Ziel erreicht werden, eine bessere Winkelauflösung des Messsystems zu erreichen.

Es ist ebenfalls möglich, mehrere Sensoren mittels eines Bussystems miteinander zu verbinden. Die Ausgabe von internen Temperatursignalen des Messelements kann ebenfalls erfolgen. Außerdem ist eine redundante Ausführung für sicherheitsrelevante Anwendungen möglich (z.B. Feststellung der Gabelposition im Hauptgetriebe). Dies kann beispielsweise dadurch erfolgen, dass für beide drehbaren Halterungen (gegenüberliegende Drehachsen) jeweils eine eigene Sensoranordnung vorgesehen ist.

Das Winkelsignal kann durch eine Kalibrierung direkt in eine korrespondierende Wegstrecke oder ein Wegsignal der Schaltgabel entlang der entsprechenden An- oder Abtriebswellenachse umgewandelt werden.

Ausführungsbeispiele ermöglichen eine leichte Anpassbarkeit an unterschiedliche Schaltgabelkonzepte durch ein universelles Schnittstellenkonzept. Die mechanische und/oder elektrische Sensoranbindung ist insbesondere zerstörungsfrei lösbar.

### BEZUGSZEICHENLISTE

- 50: Stellmittel
- 55: Kraftdruckpunkt
- 57: Gleitstein
- 60: Halterung
- 62: Drehlagerung
- 110, 120: erstes, zweites Sensorelement
- 130: Auswerteschaltung
- 132: Signalleitung
- 134: Steckverbindung
- 140: Getriebe
- 150: Gehäuse

## Patentansprüche

1. System aus Sensoranordnung und Schaltgabel, umfassend eine Sensoranordnung zur Winkelerfassung einer Schaltgabel (50) eines Schaltgetriebes und eine Schaltgabel, wobei die Schaltgabel (50) eine Drehlagerung (62) umfasst und drehbar an einer Halterung (60) gelagert ist, wobei die Sensoranordnung umfasst:
- ein erstes Sensorelement (110), das direkt mit der Schaltgabel (50) gekoppelt ist, um ansprechend auf eine Drehung der Schaltgabel (50) eine Bewegung relativ zu der Halterung (60) auszuführen;
- ein zweites Sensorelement (120), das drehfest an der Halterung (60) fixiert ist und mit dem ersten Sensorelement (110) gekoppelt ist, um bei einer Drehung der Schaltgabel (50) und einer daraus resultierenden relativen Bewegung zwischen dem ersten Sensorelement (110) und dem zweiten Sensorelement (120) ein Sensorsignal zu erzeugen, welches von der ausgeführten Drehung der Schaltgabel (50) abhängt;
- eine Auswerteschaltung (130) und
- ein Gehäuse (150), wobei das zweite Sensorelement (120) und die Auswerteschaltung (130) in dem Gehäuse untergebracht sind und zusammen mit dem Gehäuse (150) an der Halterung (60) als eine abgeschlossene Einheit fixiert sind.

2. System nach Anspruch 1, wobei das erste Sensorelement (110) einen Permanentmagneten umfasst, der mit einer Drehung der Schaltgabel (50) ein veränderliches Magnetfeld erzeugt, und das zweite Sensorelement (120) ausgebildet ist, um ansprechend auf eine Änderung des Magnetfeldes das Sensorsignal zu erzeugen.

3. System nach Anspruch 1, wobei das erste Sensorelement (110) und das zweite Sensorelement (120) Teil eines induktiven oder magnetischen Sensors sind und insbesondere einen Hall-Sensor oder einen magnetoresistiven Sensor umfasst.

4. System nach Anspruch 1, wobei das erste Sensorelement (110) und das zweite Sensorelement (120) optisch miteinander koppeln.

5. System nach einem der vorhergehenden Ansprüche, umfassend
- ein Getriebe (140), das das erste Sensorelement (110) mit der Schaltgabel (50) koppelt, um einen Drehwinkelbereich der Schaltgabel (50) auf einen größeren Winkelbereich des ersten Sensorelementes (110) zu übersetzen, um so eine größere Winkelauflösung zu ermöglichen.

6. System nach einem der Ansprüche 1 bis 4, wobei das erste Sensorelement (110) drehfest an der Schaltgabel (50) fixiert ist.

7. System nach einem der vorhergehenden Ansprüche, umfassend einen Temperatursensor zur Erfassung einer Temperatur, um eine Korrektur basierend auf der erfassten Temperatur durchzuführen.

8. Gesamtsystem, das mit einem Steuergerät koppelbar ist, umfassend
- ein System mit einer ersten Sensoranordnung nach einem der Ansprüche 1 bis 7
- zumindest eine zur ersten Sensoranordnung redundante zweite Sensoranordnung, die ebenfalls die Drehstellung der Schaltgabel (50) misst, und
- einen Bus, der ausgebildet ist, um Daten zwischen der zumindest einen ersten Sensoranordnung und der zumindest einen zweiten Sensoranordnung und dem Steuergerät zu übertragen.

9. Schaltgetriebe, umfassend
- ein System nach einem der Ansprüche 1 bis 7 oder einem Gesamtsystem nach Anspruch 8; und
- ein Steuergerät, das ausgebildet ist, um ein Schalten des Schaltgetriebes zu steuern und Sensorsignale der Sensoranordnung zu auszuwerten.

10. Schaltgetriebe nach Anspruch 9, wobei
- das Steuergerät ausgebildet ist, um das Sensorsignal in eine Wegstrecke umzurechnen und damit die Position der Schaltgabel im Getriebe festzustellen.

11. Schaltgetriebe nach Anspruch 9, sofern sich Anspruch 9 auf die Ansprüche 1-7 bezieht, oder Anspruch 10, umfassend
- einen weiteren Sensor, der ausgebildet ist, um eine Bewegung der Schaltgabel festzustellen, so dass der weitere Sensor und die Sensoranordnung redundant sind, um bei Ausfall des weiteren Sensors oder der Sensoranordnung, die ausgeführte Drehung der Schaltgabel (50) zu erfassen.

## Claims

1. System made up of a sensor arrangement and a shift fork, comprising a sensor arrangement for detecting an angle of a shift fork (50) of a manual transmission and a shift fork, wherein the shift fork (50) comprises a rotary bearing (62) and is rotatably mounted on a mount (60), wherein the sensor arrangement comprises:
- a first sensor element (110), which is coupled directly to the shift fork (50) in order to carry out a movement relative to the mount (60) in response to a rotation of the shift fork (50);
- a second sensor element (120), which is secured in a rotationally fixed fashion to the mount (60) and is coupled to the first sensor element (110) in order to generate a sensor signal when the shift fork (50) rotates and there is a resulting relative movement between the first sensor element (110) and the second sensor element (120), which sensor signal depends on the rotation carried out by the shift fork (50);
- an evaluation circuit (130); and
- a housing (150),
wherein the second sensor element (120) and the evaluation circuit (130) are accommodated in the housing and are secured together with the housing (150) on the mount (60) as an enclosed unit.

2. System according to Claim 1, wherein the first sensor element (110) comprises a permanent magnet which generates a variable magnetic field with a rotation of the shift fork (50), and the second sensor element (120) is designed to generate the sensor signal in response to a change in the magnetic field.

3. System according to Claim 1, wherein the first sensor element (110) and the second sensor element (120) are part of an inductive or magnetic sensor and comprises, in particular, a Hall sensor or a magnetoresistive sensor.

4. System according to Claim 1, wherein the first sensor element (110) and the second sensor element (120) can be coupled to one another optically.

5. System according to one of the preceding claims, comprising
- a transmission (140) which couples the first sensor element (110) to the shift fork (50) in order to convert a rotational angle range of the shift fork (50) to a relatively large angular range of the first sensor element (110), in order thereby to permit a relatively large angular resolution.

6. System according to one of Claims 1 to 4, wherein the first sensor element (110) is secured in a rotationally fixed fashion to the shift fork (50).

7. System according to one of the preceding claims, comprising a temperature sensor for sensing a temperature in order to carry out a correction on the basis of the sensed temperature.

8. Overall system which can be coupled to a control unit, comprising
- a system having a first sensor arrangement according to one of Claims 1 to 7,
- at least one second sensor arrangement which is redundant with respect to the first sensor arrangement and likewise measures the rotational position of the shift fork (50), and
- a bus which is designed to transmit data between the at least one first sensor arrangement and the at least one second sensor arrangement and the control unit.

9. Manual transmission, comprising
- a system according to one of Claims 1 to 7 or an overall system according to Claim 8, and
- a control unit which is designed to control shifting of the manual transmission and to evaluate sensor signals of the sensor arrangement.

10. Manual transmission according to Claim 9, wherein
- the control unit is designed to convert the sensor signal into a distance and thereby determine the position of a shift fork in the transmission.

11. Manual transmission according to Claim 9, if Claim 9 refers to Claims 1-7, or Claim 10, comprising
- a further sensor which is designed to detect a movement of the shift fork, with the result that the further sensor and the sensor arrangement are redundant, in order to sense, in the event of failure of the further sensor or the sensor arrangement, the rotation carried out by the shift fork (50).

## Revendications

1. Système composé d'un agencement de capteurs et d'un levier de vitesses, comprenant un agencement de capteurs pour la détection de l'angle d'un levier (50) de vitesses d'une boîte de vitesses et un levier de vitesses,
dans lequel le levier (50) de vitesses comprend un palier (62) de rotation et est monté tournant sur une fixation (60),
dans lequel l'agencement de capteurs comprend :
- un premier élément (110) de capteur qui est accouplé directement au levier (50) de vitesses pour, en fonction d'une rotation du levier (50) de vitesses, effectuer un déplacement par rapport à la fixation (60) ;
- un deuxième élément (120) de capteur qui est immobilisé sans pouvoir tourner sur la fixation (60) et qui est accouplé au premier élément (110) de capteur pour produire, lors d'une rotation du levier (50) de vitesses et d'un mouvement relatif en résultant entre le premier élément (110) de capteur et le deuxième élément (120) de capteur, un signal de capteur qui dépend de la rotation effectuée par le levier (50) de vitesses ;
- un circuit (130) d'exploitation et
- un boîtier (150),
dans lequel le deuxième élément (120) de capteur et le circuit (130) d'exploitation sont logés dans le boîtier et sont ensemble avec le boîtier (150) immobilisés sous la forme d'une unité fermée sur la fixation (60).

2. Système suivant la revendication 1,
dans lequel le premier élément (110) de capteur comprend un aimant permanent qui, par une rotation du levier (50) de vitesses, produit un champ magnétique variable, et le deuxième élément (120) de capteur est constitué pour produire le signal de capteur en réaction à une variation du champ magnétique.

3. Système suivant la revendication 1, dans lequel le premier élément (110) de capteur et le deuxième élément (120) de capteur font partie d'un capteur inductif ou magnétique et comprend notamment un capteur de Hall ou un capteur magnéto-résistif.

4. Système suivant la revendication 1, dans lequel le premier élément (110) de capteur et le deuxième élément (120) de capteur sont accouplés l'un à l'autre optiquement.

5. Système suivant l'une des revendications précédentes, comprenant
- un mécanisme (140) qui accouple le premier élément (110) de capteur au levier (50) de vitesses pour faire passer une plage d'angle de rotation du levier (50) de vitesses sur une plage d'angle plus grande du premier élément (110) de capteur afin de rendre ainsi possible une plus grande résolution angulaire.

6. Système suivant l'une des revendications 1 à 4, dans lequel le premier élément (110) de capteur est immobilisé sans pouvoir tourner sur le levier (50) de vitesses.

7. Système suivant l'une des revendications précédentes, comprenant une sonde de température pour la détection d'une température, afin d'effectuer une correction sur la base de la température relevée.

8. Système d'ensemble qui peut être accouplé à un appareil de commande comprenant
- un système ayant un premier agencement de capteurs suivant l'une des revendications 1 à 7,
- au moins un deuxième agencement de capteurs redondant avec le premier agencement de capteurs, qui mesure également la position en rotation du levier (50) de vitesses et
- un bus qui est constitué pour transmettre des données entre le au moins un premier agencement de capteurs et le au moins un deuxième agencement de capteurs et l'appareil de commande.

9. Boîte de vitesses, comprenant
- un système suivant l'une des revendications 1 à 7 ou un système d'ensemble suivant la revendication 8 ; et
- un appareil de commande qui est constitué pour commander un passage de vitesse de la boîte de vitesses et exploiter des signaux de capteur de l'agencement de capteurs.

10. Boîte de vitesses suivant la revendication 9,
dans laquelle
- l'appareil de commande est constitué pour transformer par le calcul le signal de capteur en un chemin et constater ainsi la position du levier de vitesses dans la boîte de vitesses.

11. Boîte de vitesses suivant la revendication 9 dans la mesure où la revendication 9 se rapporte aux revendications 1 à 7 ou suivant la revendication 10,
comprenant
- un autre capteur qui est constitué pour constater un déplacement du levier de vitesses de manière à ce que l'autre capteur et l'agencement de capteurs soient redondants, afin de détecter si l'autre capteur ou l'agencement de capteurs est défaillant, la rotation effectuée par le levier (50) de vitesses.
